# FASCICULE DE BREVET EUROPEEN

(11) **EP 3 772 067 B1**
(45) Date de publication et mention de la délivrance du brevet: **08.10.2025**
(21) Numéro de dépôt: 20187524.2
(22) Date de dépôt: 23.07.2020
(51) Int. Cl.: H01B 7/04, H01B 7/36, G01V 15/00

(54) **CABLE DE PUISSANCE EQUIPE D'UN DISPOSITIF ELECTRONIQUE D'IDENTIFICATION PAR RADIOFREQUENCE**
LEISTUNGSKABEL, DAS MIT EINER ELEKTRONISCHEN VORRICHTUNG ZUR IDENTIFIZIERUNG ÜBER FUNKFREQUENZ AUSGESTATTET IST
POWER CABLE PROVIDED WITH AN ELECTRONIC DEVICE FOR IDENTIFICATION BY RADIOFREQUENCY

(30) Priorité: 02.08.2019 FR 1908882; 06.08.2019 FR 1909008
(43) Date de publication de la demande: 03.02.2021
(73) Titulaire: Nexans, 92400 Courbevoie (FR)
(72) Inventeur: ROUSSELET, Nicolas, 69230 SAINT-GENIS-LAVAL (FR); LUMPP, Cédric, 92100 BOULOGNE-BILLANCOURT (FR); LAND, Drayton Larry, EL DORADO, AR 71730 (US); RAINES, Anthony, LILLIE, LA 71256 (US); ANDRE, Aymeric, 06160 ANTIBES (FR); KALB, Frédérique, 28260 BONCOURT (FR)
(74) Mandataire: Cabinet Boettcher

(56) Documents cités:
- WO-A1-2004/072989
- WO-A1-2017/211926
- CN-U- 208 921 045
- US-A1- 2004 184 747

## Description

La présente invention se rapporte à un câble de puissance équipé d'un dispositif électronique d'identification par radiofréquence.

L'invention appartient au domaine des câbles électriques de puissance.

Dans certaines applications, les câbles électriques de puissance sont mobiles en cours de fonctionnement et subissent par conséquent des mouvements de flexion et/ou de torsion et/ou toute autre sollicitation mécanique. C'est le cas, par exemple, des câbles du secteur minier utilisés dans des engins tels que des pelleteuses (en anglais « shovels ») ou des pelles à benne traînante (en anglais « draglines »).

Par ailleurs, il peut être utile de disposer sur ou dans ces câbles des dispositifs électroniques d'identification par radiofréquence ou RFID. De tels dispositifs permettent par exemple d'identifier les câbles et peuvent mémoriser et transmettre d'autres informations utiles.

Ces dispositifs électroniques comportent des composants électroniques relativement fragiles, qui sont susceptibles d'être endommagés par les sollicitations mécaniques susmentionnées, au point de ne plus fonctionner correctement.

WO 2017/211926 A1 décrit un câble d'alimentation comprenant au moins un conducteur et un tube creux au moins partiellement rempli d'un matériau traçable, et la méthode pour fabriquer ce câble.

WO 2004/072989 A1 décrit un câble comprenant un long corps continu capable de stocker une plus grande quantité d'informations sur ce câble.

CN 208 921 045 U décrit un câble comprenant une âme de câble, une gaine entourant la périphérie de l'âme de câble et des unités RFID agencées entre l'âme de câble et la gaine dans le sens de la longueur du câble.

US2004/184747 A1 décrit un câble dans lequel, même lorsqu'il existe un volume substantiel d'informations d'identification de câble pour identifier le câble, toutes ces informations d'identification de câble peuvent être écrites simplement et rapidement.

La présente invention a pour but de remédier aux inconvénients précités de l'art antérieur.

Dans ce but, la présente invention propose un câble de puissance conforme à la revendication 1.

Ainsi, le dispositif d'identification par radiofréquence ou RFID, disposé à l'intérieur du tube, est protégé contre les tensions mécaniques causées par des torsions ou des flexions du câble. En outre, l'émission et la réception par le dispositif RFID sont améliorées du fait de la présence du tube, qui augmente la distance entre le dispositif RFID et le(s) conducteur(s) électrique(s) contenu(s) dans le câble et près duquel (ou desquels) est situé le tube.

Le cordon de support permet de faciliter la mise en place et l'extraction du dispositif RFID, tout en évitant que ce dernier se déplace de façon incontrôlée à l'intérieur du tube.

L'au moins un dispositif RFID est disposé sur l'au moins un cordon de support.

Cela confère un certain degré de liberté au dispositif RFID, qui peut ainsi mieux résister à la tension mécanique.

Dans un mode particulier de réalisation, le tube présente un diamètre intérieur tel que la surface de la section transversale du dispositif électronique d'identification par radiofréquence représente le tiers de la surface de la section transversale intérieure du tube.

Ce rapport de dimensions entre le dispositif RFID et l'intérieur du tube permet d'assurer une liberté de mouvement suffisante au dispositif RFID à l'intérieur du tube.

Dans un mode particulier de réalisation, la longueur de l'au moins un cordon de support est supérieure, de moins de 10%, à la longueur de l'au moins un tube.

Cette surlongueur contribue à une mobilité maîtrisée du cordon de support, et donc du dispositif RFID, à l'intérieur du tube.

Dans un mode particulier de réalisation, l'au moins un tube présente une paroi interne lisse. Cela garantit que ni le cordon de support, ni le dispositif RFID ne s'accrocheront à la paroi interne du tube.

Dans ce mode particulier de réalisation, le tube peut être réalisé par extrusion.

Dans un mode particulier de réalisation dans lequel le câble comporte une pluralité de conducteurs électriques et une pluralité d'interstices entre les conducteurs de la pluralité de conducteurs électriques, le câble comporte une pluralité de tubes disposés dans la pluralité d'interstices, chacun des tubes contenant au moins un dispositif électronique d'identification par radiofréquence.

Dans un mode particulier de réalisation, l'au moins un dispositif électronique d'identification par radiofréquence comporte au moins une puce et au moins une antenne de communication.

Dans un mode particulier de réalisation, le câble est un câble minier.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une vue schématique en section transversale d'un câble de puissance conforme à la présente invention, dans un mode particulier de réalisation.
[Fig. 2] est une vue schématique en coupe longitudinale d'une portion d'un tube contenant un dispositif électronique d'identification par radiofréquence, ce tube étant compris dans un câble de puissance conforme à la présente invention, dans un mode particulier de réalisation.

### Description de mode(s) de réalisation

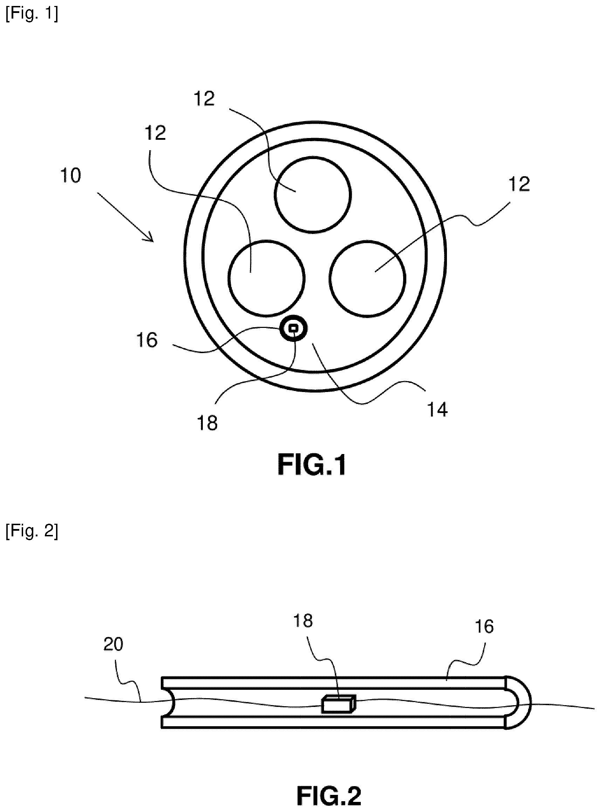

Comme le montre la figure 1, un câble 10 de puissance conforme à la présente invention comporte au moins un conducteur électrique 12. Dans le mode particulier de réalisation illustré, le câble 10 de puissance comporte trois conducteurs électriques 12.

A titre d'exemple nullement limitatif, le câble 10 de puissance peut être un câble minier.

Le câble 10 de puissance comporte au moins un interstice 14. Les interstices 14 sont situés à l'intérieur du câble, au voisinage du ou des conducteurs électriques 12 et correspondent au volume intérieur du câble 10 de puissance qui reste libre une fois que tous les composants du câble 10 de puissance ont été assemblés.

Le câble 10 de puissance comporte en outre au moins un tube 16 disposé dans l'interstice 14 ou l'un des interstices 14. Dans le mode particulier de réalisation illustré, le tube 16 est disposé dans l'interstice 14 formé entre deux des trois conducteurs électriques 12.

Le câble 10 de puissance comporte par ailleurs au moins un dispositif électronique 18 d'identification par radiofréquence ou dispositif RFID.

Le dispositif RFID 18 comporte par exemple au moins une puce électronique et au moins une antenne de communication, la puce et l'antenne étant assemblées par exemple par enrobage dans une résine.

Conformément à l'invention, le dispositif RFID 18 est contenu dans le tube 16.

Le tube 16 peut par exemple être réalisé par extrusion. Sa surface interne est suffisamment lisse pour permettre la mobilité du cordon 20 de support et du dispositif RFID 18 sans que ceux-ci accrochent à cette paroi.

Le tube 16 peut être réalisé dans une matière isolante, par exemple en polyamide.

Comme représenté sur la figure 2, le câble 10 de puissance comporte en outre au moins un cordon 20 de support disposé dans le tube 16 et sur lequel est disposé le dispositif RFID 18.

De préférence, le tube 16 ne contient pas de matière solide ou liquide qui pourrait gêner la mobilité du cordon 20 à l'intérieur du tube. Le tube 16 est de préférence rempli d'un gaz comme de l'air.

Pour assurer une continuité du cordon 20 de support et renforcer ses propriétés mécaniques, le cordon 20 de support peut être réalisé dans un fil textile, non conducteur, à haute résistance mécanique ou à haute élasticité, comportant une âme centrale constituée d'un matériau présentant une haute résistance à la traction longitudinale comme par exemple du polyamide 6-6 ou du Vectran (marque déposée).

Le dispositif RFID 18 est fixé au cordon 20 de support par guipage. Afin d'assurer la cohésion de l'assemblage, deux couches de guipage sont prévues, les pas d'assemblage étant opposés. L'enrobant pourra être constitué, entre autres, de polyamide ou d'élasthanne.

Le cordon 20 de support est mobile librement à l'intérieur du tube 16, car il n'est fixé qu'aux extrémités du tube 16, sans être soumis à une tension mécanique. Ainsi, le dispositif RFID 18 est également mobile librement à l'intérieur du tube 16, dans la limite de sa liaison au cordon 20 de support.

Pour garantir une liberté de mouvement satisfaisante, le tube 16 présente un diamètre intérieur tel que la surface de la section transversale du dispositif RFID 18 représente par exemple le tiers de la surface de la section transversale intérieure du tube 16. Néanmoins, le diamètre intérieur du tube 16 est suffisamment petit par rapport à la taille du dispositif RFID 18 pour n'autoriser que des déplacements longitudinaux du cordon 20 de support, évitant notamment la formation de nœuds sur ce dernier.

Par ailleurs, la longueur du cordon 20 de support est supérieure, de moins de 10%, à la longueur du tube 16.

Le diamètre extérieur du tube 16 est bien entendu choisi de façon que le tube 16 s'insère correctement dans l'interstice 14 prévu pour le recevoir.

Le mode de réalisation de la figure 1 présente un câble 10 de puissance à plusieurs conducteurs 12, équipé d'un seul tube 16 qui contient un seul dispositif RFID 18. En variante, le câble 10 de puissance pourrait comporter plusieurs tubes 16 disposés dans un ou plusieurs interstices 14 du câble 10 situés entre les conducteurs 12, chacun des tubes 16 contenant un ou plusieurs dispositifs RFID 18 disposés sur un ou plusieurs cordons 20 de support.

## Revendications

1. Câble (10) de puissance comportant au moins un conducteur électrique (12) et au moins un interstice (14) au voisinage dudit conducteur électrique (12), ledit câble (10) comportant en outre au moins un dispositif électronique (18) d'identification par radiofréquence, ledit câble (10) comportant en outre au moins un tube (16) disposé dans ledit au moins un interstice (14) et contenant ledit dispositif électronique (18) d'identification par radiofréquence, ledit câble (10) étant **caractérisé en ce qu'**il comprend en outre au moins un cordon (20) de support disposé dans ledit tube (16) et mobile librement à l'intérieur dudit tube (16), ledit au moins un dispositif électronique (18) d'identification par radiofréquence étant disposé sur ledit au moins un cordon (20) de support et étant fixé audit au moins un cordon (20) de support par deux couches de guipage dont les pas d'assemblage sont opposés.

2. Câble (10) selon la revendication 1, **caractérisé en ce que** ledit tube (16) présente un diamètre intérieur tel que la surface de la section transversale dudit dispositif électronique (18) d'identification par radiofréquence représente le tiers de la surface de la section transversale intérieure dudit tube (16).

3. Câble (10) selon la revendication 1 ou 2, **caractérisé en ce que** la longueur dudit au moins un cordon (20) de support est supérieure, de moins de 10%, à la longueur dudit au moins un tube (16).

4. Câble (10) selon l'une quelconque des revendications précédentes, **caractérisé en ce que** ledit au moins un tube (16) présente une paroi interne lisse.

5. Câble (10) selon la revendication 4, **caractérisé en ce que** ledit tube (16) est réalisé par extrusion.

6. Câble (10) selon l'une quelconque des revendications précédentes, comportant une pluralité de conducteurs électriques (12) et une pluralité d'interstices (14) entre les conducteurs de ladite pluralité de conducteurs électriques (12), **caractérisé en ce qu'**il comporte une pluralité de tubes (16) disposés dans ladite pluralité d'interstices (14), chacun desdits tubes (16) contenant au moins un dispositif électronique (18) d'identification par radiofréquence.

7. Câble (10) selon l'une quelconque des revendications précédentes, **caractérisé en ce que** ledit au moins un dispositif électronique (18) d'identification par radiofréquence comporte au moins une puce et au moins une antenne de communication.

8. Câble (10) selon l'une quelconque des revendications précédentes, **caractérisé en ce que** c'est un câble minier.

## Patentansprüche

1. Leistungskabel (10), enthaltend zumindest einen elektrischen Leiter (12) und zumindest einen in der Umgebung des elektrischen Leiters liegenden Zwischenraum (14), wobei das Kabel ferner zumindest eine elektronische Funkfrequenz-Identifikationsvorrichtung (18) enthält, wobei das Kabel (10) ferner zumindest ein Rohr (16) enthält, das in dem zumindest einen Zwischenraum (14) angeordnet ist und die elektronische Funkfrequenz-Identifikationsvorrichtung (18) beinhaltet, wobei das Kabel (10) **dadurch gekennzeichnet ist, dass** es ferner zumindest eine in dem Rohr (16) angeordnete Tragschnur (20) umfasst, die sich innerhalb des Rohrs (16) frei bewegen kann, wobei die zumindest eine elektronische Funkfrequenz-Identifikationsvorrichtung (18) durch zwei Umwicklungslagen mit entgegengesetzten Schlaglängen an der zumindest einen Tragschnur (20) befestigt ist.

2. Kabel (10) nach Anspruch 1, **dadurch gekennzeichnet, dass** das Rohr (16) einen derart bemessenen Innendurchmesser aufweist, dass die Querschnittsfläche der elektronischen Funkfrequenz-Identifikationsvorrichtung (18) einem Drittel der Innenquerschnittsfläche des Rohrs (16) entspricht.

3. Kabel (10) nach Anspruch 1 oder 2, **dadurch gekennzeichnet, dass** die Länge der zumindest einen Tragschnur (20) um zumindest 10% größer ist als die Länge des zumindest einen Rohrs (16).

4. Kabel (10) nach einem der vorhergehenden Ansprüche, **dadurch gekennzeichnet, dass** das zumindest eine Rohr (16) eine glatte Innenwand aufweist.

5. Kabel (10) nach Anspruch 4, **dadurch gekennzeichnet, dass** das Rohr (16) durch Extrusion hergestellt ist.

6. Kabel (10) nach einem der vorhergehenden Ansprüche, enthaltend eine Mehrzahl von elektrischen Leitern (12) und eine Mehrzahl von zwischen den Leitern aus der Mehrzahl von elektrischen Leitern (12) liegenden Zwischenräumen (14), **dadurch gekennzeichnet, dass** das Kabel eine Mehrzahl von Rohren (16) enthält, die in der Mehrzahl von Zwischenräumen (14) angeordnet sind, wobei jedes der Rohre (16) zumindest eine elektronische Funkfrequenz-Identifikationsvorrichtung (18) beinhaltet.

7. Kabel (10) nach einem der vorhergehenden Ansprüche, **dadurch gekennzeichnet, dass** die zumindest eine Funkfrequenz-Identifikationsvorrichtung (18) zumindest einen Mikrochip und zumindest eine Kommunikationsantenne enthält.

8. Kabel (10) nach einem der vorhergehenden Ansprüche, **dadurch gekennzeichnet, dass** es sich bei dem Kabel um ein Grubenkabel handelt.

## Claims

1. Power cable (10) comprising:
at least one electrical conductor (12) and at least one interstice (14) in the vicinity of said electrical conductor (12), said cable (10) further comprising at least one electronic device (18) for radiofrequency identification, comprising at least one tube (16) arranged in said at least one interstice (14) and containing said electronic device (18) for radiofrequency identification, said cable (10) being **characterized in that** it comprises at least one support cord (20) arranged in said tube (16) and freely mobile inside said tube (16), said at least one electronic device (18) for radiofrequency identification being arranged on said at least one support cord (20) and being attached to said at least one support cord (20) by two layers of wrapping whose assembly pitches are opposite.

2. Cable (10) according to claim 1, **characterized in that** said tube (16) has an inner diameter such that the area of the cross section of said electronic device (18) for radiofrequency identification represents a third of the area of the inner cross section of said tube (16).

3. Cable (10) according to claim 1 or 2, **characterized in that** the length of said at least one support cord (20) is greater, by less than 10%, than the length of said at least one tube (16).

4. Cable (10) according to anyone of the preceding claims, **characterized in that** said at least one tube (16) has a smooth inner wall.

5. Cable (10) according to claim 4, **characterized in that** said tube (16) is made by extrusion.

6. Cable (10) according to anyone of the preceding claims, further comprising a plurality of electrical conductors (12) and a plurality of interstices (14) between the conductors of said plurality of electrical conductors (12), **characterized in that** it further comprises a plurality of tubes (16) arranged in said plurality of interstices (14), each of said tubes (16) containing at least one electronic device (18) for radiofrequency identification.

7. Cable (10) according anyone of the preceding claims, wherein said at least one electronic device (18) for radiofrequency identification comprises at least one chip and at least one communication antenna.

8. Cable (10) according to anyone of the preceding claims, wherein said cable is a mining cable.
